# EUROPEAN PATENT APPLICATION

(11) **EP 4 579 431 A1**
(43) Date of publication of application: **02.07.2025**
(21) Application number: 24219939.6
(22) Date of filing: 13.12.2024
(51) Int. Cl.: G06F 3/14, G06F 9/451, G06F 13/10, G09G 5/14, G09G 5/36

(54) **DISPLAY CONTROLLER AND METHOD FOR DISPLAYING DATA**

(30) Priority: 26.12.2023 CN 202311810244
(71) Applicant: NXP USA, Inc., Austin, TX 78735 (US)
(72) Inventor: Liu, Panpan, 5656AG Eindhoven (NL); Huang, Yinli, 5656AG Eindhoven (NL)
(74) Representative: Hardingham, Christopher Mark

(57) **Abstract**

A display controller includes a first manager unit and a second manager unit. The first manager unit receives first display data from a first data source by way of a service manager unit, and produces first composed data using the first display data. The second manager unit receives second display data directly from a second data source, and produces second composed data using the second display data. The display controller provides the first composed data and the second composed data to a graphic processing unit to perform rendering process using the first composed data and the second composed data, and to produce rendered display data to be provided to a display apparatus.

## Description

### BACKGROUND

The present disclosure relates to a display controller and a method for displaying data, and a method of receiving display data.

Operating systems include Direct Rendering Manager (DRM) for interfacing with display controllers. User-space programs access DRMs to send data to the display controllers and perform necessary configurations and settings. Typically, at a given time, the DRM offers an interface which is accessible to only one user-space program, namely a DRM-Master. Attempts to access the DRM from any user-space program, also referred to as user-space process, other than the DRM-Master will fail. There exists the need to access DRM from more than one progress.

### SUMMARY

This summary is provided to introduce a selection of concepts in a simplified form that are further described below in the Detailed Description. This summary is not intended to identify key or essential features of the claimed subject matter, nor is it intended to be used to limit the scope of the claimed subject matter.

In one embodiment, a display controller includes a first manager unit and a second manager unit. The first manager unit receives first display data from a first data source by way of a service manager unit, and produces first composed data using the first display data. The second manager unit receives second display data directly from a second data source, and produces second composed data using the second display data. The display controller provides the first composed data and the second composed data to a graphic processing unit to perform rendering process using the first composed data and the second composed data, and to produce rendered display data to be provided to a display apparatus.

In another embodiment, a method for displaying display data includes: registering a manager unit comprising a status indicator as a target for receiving display data; at the manager unit, in response to the status indicator being indicative of the manager unit being available, receiving display data directly from a data source; producing, by the manager unit, composed data using the received display data; and providing the composed data for rendering and displaying.

In another embodiment, at a kernel zone, a method of receiving display data includes: receiving first display data from a first user process by way of a service manager unit while rejecting other data from an other user process to be received; wherein both the first user process and the service manager unit are within a user zone different from the kernel zone; and receiving second display data directly from a second user process. In one or more embodiments, receiving first display data from the first user process by way of the service manager unit comprises: in response to a status indicator of a first manager unit at the kernel zone being indicative of the first manager unit being available, the first manager unit receiving the first display data. In one or more embodiments, receiving second display data directly from the second user process comprises: in response to a status indicator of a second manager unit being indicative of the second manager unit being available, the second manager unit receiving the second display data. In one or more embodiments, the kernel zone is an Android kernel, and wherein the service manager unit is a Surfaceflinger module of the Android operating system. In one or more embodiments, the kernel zone is a Linux kernel, and wherein the service manager unit is a Weston module of the Linux operating system.

### BRIEF DESCRIPTION OF THE DRAWINGS

So that the manner in which the above recited features of the present disclosure can be understood in detail, a more detailed description of the disclosure may be had by reference to embodiments, some of which are illustrated in the appended drawings. The appended drawings illustrate only typical embodiments of the disclosure and should not limit the scope of the disclosure, as the disclosure may have other equally effective embodiments. The drawings are for facilitating an understanding of the disclosure and thus are not necessarily drawn to scale. Advantages of the subject matter claimed will become apparent to those skilled in the art upon reading this description in conjunction with the accompanying drawings, in which like reference numerals have been used to designate like elements, and in which:
Fig. 1 is a block diagram of a system including a display controller according to an embodiment;
Fig. 2 is a block diagram depicting a structural arrangement of a system including the display controller of an embodiment;
Fig. 3 is a block diagram of a system including two DRMs according to an embodiment;
Fig. 4 is a flow diagram of a method for displaying display data according to an embodiment; and
Fig. 5 is a flow diagram of a method of receiving display data according to another embodiment.

### DETAILED DESCRIPTION

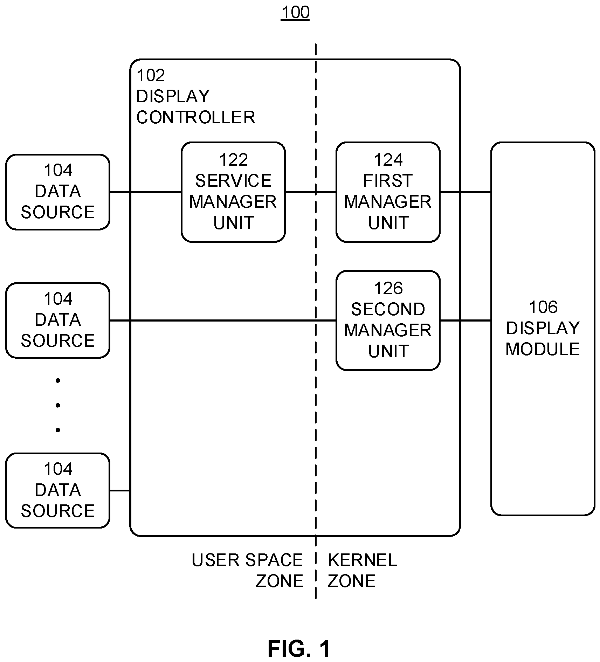

Fig. 1 is a block diagram of a system including a display controller according to an embodiment. The system 100 includes a display controller 102, multiple data sources 104, and a display module 106. The display controller 102 according to the embodiment is implemented by a display driver module in an Operating System (OS), for example an Android OS or a Linux OS. The display controller 102 receives display data from the data sources 104, performs necessary operations on the received display data, and sends the processed display data to the display module 106. In implementations where the display controller 102 is the display driver module in the operating system, the data sources 104 can be user processes (user applications) of the OS that access the display controller 102 through interfaces. In the embodiments, the display module 106 can be a display screen with hardware interfaces coupled with and driven by the OS.

The display controller 102 includes a service manager unit 122, a first manager unit 124 and a second manager unit 126. The first manager unit 124 receives display data from one of the data sources 104 by way of the service manager unit 122. The second manager unit 126 receives display data directly from one of the data sources 104 without it passing through, or going via, the service manager unit 122. In the embodiment shown, the first manager unit 124 and the second manager unit 126 are implemented as Direct Rendering Managers (DRMs) of the OS. The first manager unit 124 operates on any display data which it receives, that is to say, its received display data to produce first composed data as a response. Similarly, the second manager unit 126 also operates on its received display data to produce second composed data as a response.

In the implementations of an OS, the data sources 104 and the service manager unit 122 are within a so-called "user space zone" of the OS, and the first manager unit 124 and the second manager unit 126 are within a so-called "kernel zone" of the OS. In the example where the OS is the Android OS, the service manager unit 122 is a Surfaceflinger module of the Android OS. In the example where the OS is the Linux OS, the service manager unit 122 is a Weston module of the Linux OS. Both the Surfaceflinger module and the Weston module allow only one user space process, i.e. only one data source 104, to access the DRM 124, which means while the first manager unit 124 is being accessed by one of the user space processes 104, namely a DRM-Master, the service manager unit 122 will reject, or block, attempts from other data sources 104 to access the DRM 124.

The service manager unit 122 manages a buffer (not shown) which receives the display data from the data source 104, and buffers the received display data. In response to a synchronization signal (typically from the display module 106) which is indicative of the display module 106 is about to refresh a displaying frame, the service manager unit 122 forwards the buffered display data to the first manager unit 124. In the case that the implementation of the service manager unit 122 is the Surfaceflinger module of the Android OS, the synchronization signal is a vertical synchronization signal "vsync". As described above, forwarding the buffered display data by the service manager unit 122 to the DRM 124 restricts other data source 104 from accessing the first manager unit 124 in the meantime.

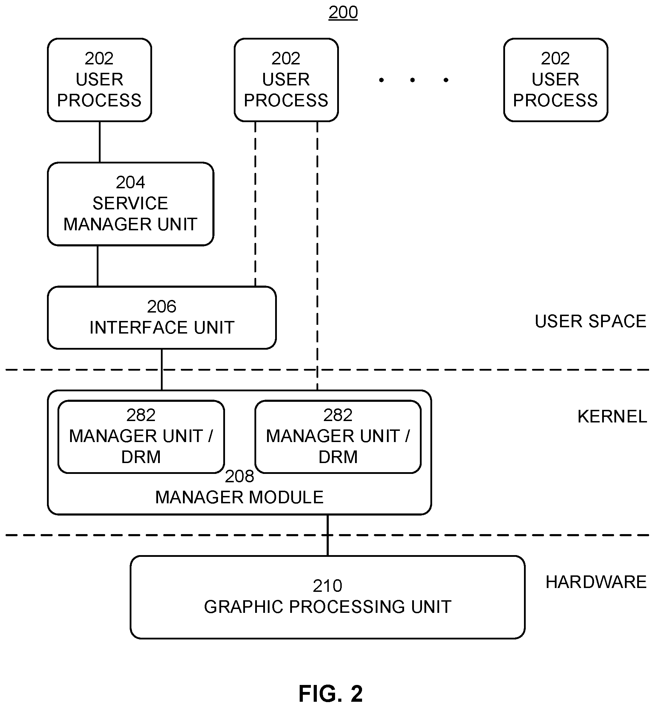

Fig. 2 is a block diagram depicting a structural arrangement of a system including the display controller of the present embodiment. Fig. 2 shows the system 200 implemented as an operating system which includes multiple user processes 202, also referred to as clients, a service manager unit 204, an interface unit 206, a manager module 208 including at least two manager units 282, and a Graphic Processing Unit (GPU) 210. The multiple clients 202 are configured to send display data for displaying on a screen driven by the graphic processing unit 210 within a hardware zone. The service manager unit 204, as described above, can be implemented as the Surfaceflinger module in implementations where the system 200 is the Android OS, or as the Weston module in implementations where the system 200 is the Linux OS. The interface unit 206 is a set of interface APIs necessary for accessing the manager module 208, the DRM. Typically, the interface unit 206 can be a "libdrm" source in the OS. One of the clients 202 is shown to connect to the interface unit 206 and the manager module 208 in dotted line, which means that the client 202 which interacts with the DRM 282 without through the service manager unit 204 can either call the DRM 282 directly or through the libdrm source 206. In the embodiment, the clients 202, the Surfaceflinger module or the Weston module 204, and the libdrm source 206, are all within the user interface zone of the OS. It is already understood that Surfaceflinger module or the Weston module 204 consumes significant processing resources and causes a heavy load on the CPU (Central Processing Unit); thus, the direct access to the DRM 282 without involving the Surfaceflinger module or the Weston module 204 to participate may reduce the CPU loading, significantly, for instance by as much as 90%.

Located within a kernel zone of the OS in the embodiment, the DRM 282 exhibits a status so that the service manager unit 204 or the clients 202 uses the status to decide whether to send the display data to the DRM 282. For example, the status of the DRM 282 is stored (for example as a flag, or status indicator), the service manager unit 204 or the client 202 checks the status, and determines whether to send the display data based on the status. Also as described above, the service manager unit 204 allows, at a time, only one client 202 to access the DRM module 208. However, according to embodiments of the present disclosure, if one of the DRMs 282 is being accessed by a client 202 by way of the service manager unit 204, it is still possible for another client 202 to access another DRM 282 directly and concurrently, without going through or via the service manager unit 204.

Referring to Fig. 2, individual ones of the DRM 282 of the manager module 208 produces composed data using the received display data, either from the clients 202 or relayed by the service manager unit 204. One example of the manager module 208 composing to produce the composed data will be explained in detail below. The composed data are provided to the graphic processing unit 210 for rendering and displaying. The graphic processing unit 210 is within the hardware zone in the embodiment. The graphic processing unit 210 provides rendered display data to a display apparatus (not shown), for example a screen.

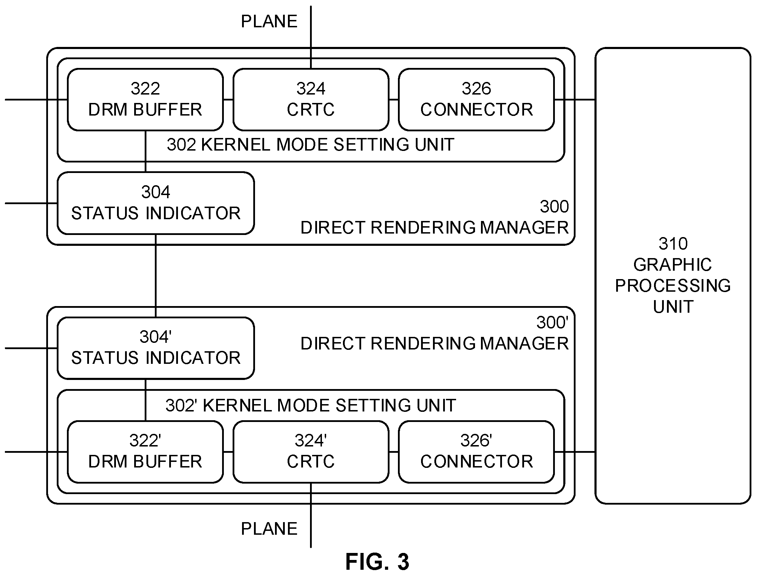

Fig. 3 is a block diagram of a system including a DRM 300 and another DRM 300' according to an embodiment. DRMs 300 and 300' are similar to each other, and are both connected to a GPU 310, similar to that shown in Fig. 2. Only DRM 300 will be described, and DRM 300' has corresponding configurations with similar references but with a suffixing superscript. The DRM 300 of Fig. 3 can be implementations of the manager units 282 of the manager module 208 of Fig. 2. The DRM 300 includes a Kernel Mode Setting (KMS) unit 302 and a status indicator 304. The KMS unit 302 receives the supplied display data, and uses the display data to configure display parameters and update the display contents. The KMS unit 302 includes a DRM buffer 322, a CRT controller CRTC 324, and a connector 326. The DRM buffer 322 receives the display data, for example, either directly from the client 202 or by way of the service manager unit 204 of Fig. 2. The CRTC 324 also receives plane data and composes the received display data with the plane data, to produce composed data to be provided to the GPU 310. As an example, the display data received at the DRM buffer 322 represents the content to be placed on a layer of display, and the plane data received at the CRTC 324 represents one of the multiple layers in a displayed image. The CRTC 324 composes the display data with the plane data, and produces the composed data which represents a complete layer of image to be displayed. It is understood that the content displayed includes at least one layer of image, which is supplied in frames and refreshed at a predetermined frequency.

The connector 326 acts as an interface to provide the composed data to the GPU 310. In various embodiments, the KMS unit 302 may include more than one DRM buffer 322, each configured to receive and buffer the display data. The CRTC 324 switches among the DRM buffers 322, to retrieve corresponding display data for composing with the plane data.

The DRM 300 further includes a status indicator 304. A status of the status indicator 304 is representative of whether the DRM 300 is available to be accessed, which means whether the DRM 300 is open to receive the display data. The DRM buffer 322 receives and buffers the display data if the status of the status indicator 304 shows the DRM 300 being available. In various embodiments, the status indicator 304 can be a flag in the OS, or a register. The status indicator 304 of the DRM 300 may also be configured to update the status indicator 304' of the DRM 300', so that the availability statuses of the DRMs are shared among the DRMs.

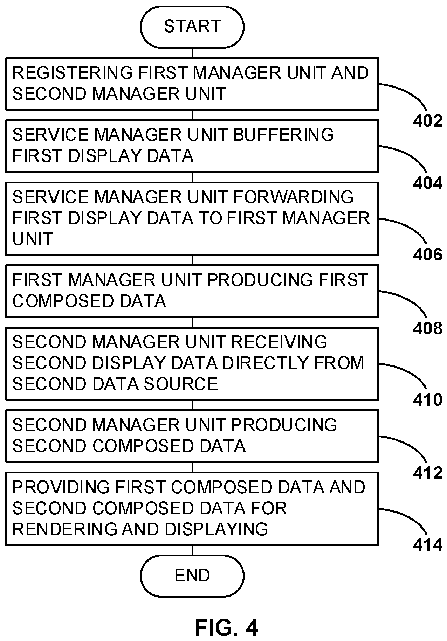

Fig. 4 is a flow diagram of a method for displaying display data according to an embodiment. The method of Fig. 4 will be described with reference to the systems of Figs. 1-3. Step 402, the first manager unit, the DRM 124, and the second manager unit 126 are both registered as targets for receiving display data. The registration of the DRMs will be described in detail below. Step 404, the service manager unit 122 buffers the display data that is received from the first data source 104. Step 406, the service manager unit 122 forwards the buffered display data to the first manager unit, the DRM 124. The service manager unit 122 accordingly rejects other data from other user process to be provided to the first manager unit 124 which is being accessed. As described above with reference to Fig. 3, the service manager unit forwards the buffered display data to the DRM 300 in response to the status indicator 304 being indicative of the DRM 300 being available. Step 408, the first manager unit 124 produces the first composed data using the forwarded display data. As described above, the DRM 124 produces the first composed data by composing the received display data with the received plane data.

Step 410, the second manager unit 126 receives the display data directly from the second data source, the user process 104. As described above with reference to Fig. 3, the DRM 300' receives the display data in response to the status indicator 304' being indicative of the DRM 300' being available. Step 412, the second manager unit 126 produces the second composed data using the received display data. As described above, the DRM 126 produces the second composed data by composing the received display data with the received plane data. Step 414, the first manager unit 124 provides the first composed data to the display module 106, and the second manager unit 126 provides the second composed data to the display module 106, for rendering and displaying.

Referring back to Fig. 3, in implementations where the system is an OS, a graphic sub-system node in the device tree lists all the display interface resources. In initiating the system, DRM 300 and DRM 300' both register to the OS, for example registered as /dev/dri/cardx, in the case the OS is Linux or Android. Components of the DRM 300, including the CRTC 324, the connector 326, etc., are bound together as a DRM device in the device tree using a DRM bind function, the exact nature of which may vary between different OS. Components of the DRM 300', including the CRTC 324', the connector 326', etc., are also bound together as a DRM device in the device tree using the DRM bind function of the DRM 300, such that the DRM 300 and the DRM 300' will be connected together to the display sub-system node of the device tree, and commit availability to resources external the kernel zone as targets for receiving display data. As a result, necessary configurations for the DRM 300' are inherited from the DRM 300, for example the pixelclock in the case the OS is Linux or Android. In initialization, the number of occupation of planes in the DRM 300 is reduced by one, because the DRM 300' takes over the control of one plane. With the device tree of the OS, the DRM 300' is supplied with the corresponding timing and zpos (z order which designates the order of planes in the CRTC 324'), so to initialize the DRM 300' for its own plane composition. DRM 300' thus initiated is able to be accessed.

It is understood that the DRM 300, if to be accessed by way of the service manager unit, for example the Surfaceflinger module or the Weston module, will not be accessed by the data sources until the service manager unit is fully initiated. In the examples of the Android or Linux OS, it make take as long as 15 seconds before Surfaceflinger or Weston modules are initialized and data sources can access the DRM by way of the modules. DRM 300' as described in the embodiment take a shorter time, for example 9 seconds, to boot up fast and become available for time-critical user applications. For example, the automobile industry standard ASIL (Automotive Safety Integrity Level) X requires a fast response to particular applications, *e*.*g*. graphic applications RVC (Rear View Camera) displays, SVC (Surround View Camera) displays, or 360 camera displays. DRM 300' according to the embodiment performs the fast boot to become ready before the Surfaceflinger or Weston module is initialized, and meets the requirements. User applications are able to display contents on the screen quickly, enhancing the real-time experience.

In operation, the DRM 300 and DRM 300' both commits (by so-called "Atomic Commit" according to the Linux or Android OS) their DRM buffers 322 and 322' to clients in the user space. Clients access the DRM if the DRM's status indicator represents that the DRM is available (Atomic Check), and the DRM buffers are updated (plane atomic update). User space clients can separately control the display content to the plane of the DRM, and the display contents from multiple clients, for example user applications AR (Augmented Reality), VR (Virtual Reality), XR (Extended Reality), etc., will be composed onto planes and conveniently create an overlaying or superposition effect at the display.

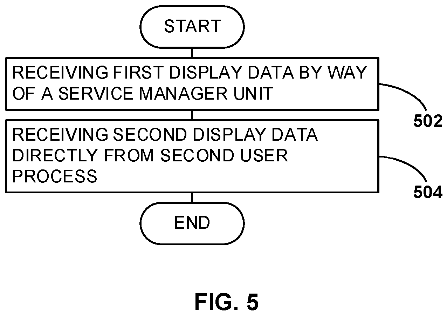

Fig. 5 is a flow diagram of a method of receiving display data according to an embodiment. The method will be described with reference to the system 200 of Fig. 2 and the system 300 of Fig. 3. The method of receiving display data is implemented within the kernel zone of an OS. Step 502, in response to the status indicator 304 of the DRM 300 at the kernel zone being indicative of the DRM 300 being available, the DRM 300 receives display data from a first client, for example a first user process 202 of Fig. 2, by way of the service manager unit 204. In the meantime, the service manager unit 204, for example the Surfaceflinger module of the Android OS or the Weston module of the Linux OS, rejects other data from other user process to be provided to the DRM which is being accessed. Step 504, in response to the status indicator 304' of the DRM 300' at the kernel zone being indicative of the DRM 300' being available, the DRM 300' receives display data directly from a second client, for example a second user process 202 of Fig. 2, without through the service manager unit 204. Step 504 may be performed concurrently with step 502.

The use of the terms "a" and "an" and "the" and similar referents in the context of describing the subject matter (particularly in the context of the following claims) are to be construed to cover both the singular and the plural, unless otherwise indicated herein or clearly contradicted by context. The terms "coupled" and "connected" both mean that there is an electrical connection between the elements being coupled or connected, and neither implies that there are no intervening elements. Furthermore, the foregoing description is for the purpose of illustration only, and not for the purpose of limitation, as the scope of protection sought is defined by the claims set forth hereinafter together with any equivalents thereof entitled to. The use of any and all examples, or exemplary language (*e*.*g*., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the disclosure as claimed.

Preferred embodiments are described herein, including the best mode known to the inventor for carrying out the claimed subject matter. Of course, variations of those preferred embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law. Moreover, any combination of the above-described elements in all possible variations thereof is encompassed unless otherwise indicated herein or otherwise clearly contradicted by context.

## Claims

1. A display controller comprising:
a first manager unit configured to receive first display data from a first data source by way of a service manager unit, and produce first composed data using the first display data; and
a second manager unit configured to receive second display data directly from a second data source, and produce second composed data using the second display data;
wherein the display controller is configured to provide the first composed data and the second composed data to a graphic processing unit configured to perform rendering process using the first composed data and the second composed data, and produce rendered display data to be provided to a display apparatus.

2. The display controller of claim 1, wherein the first manager unit and the second manager unit are Direct Rendering Manager modules.

3. The display controller of claim 2, wherein
the first manager unit comprises a first kernel mode setting unit configured to configure display parameters and update display contents using the received first display data; and
the second manager unit comprises a second kernel mode setting unit configured to configure display parameters and update display contents using the received second display data.

4. The display controller of claim 3, wherein
the first kernel mode setting unit comprises at least one first DRM buffer each configured to receive the first display data, and the first kernel mode setting unit is configured to compose the first display data with first plane data, to produce the first composed data; and
the second kernel mode setting unit comprises at least one second DRM buffer each configured to receive the second display data, and the second kernel mode setting unit is configured to compose the second display data with second plane data, to produce the second composed data.

5. The display controller of claim 1, wherein
the display controller is within a kernel zone of an operating system; and
the service manager unit is within a user space of the operating system.

6. The display controller of claim 5, wherein the operating system is an Android operating system, and wherein the service manager unit is a Surfaceflinger unit in the Android operating system.

7. The display controller of claim 5 or 6, wherein the operating system is a Linux operating system, and wherein the service manager unit is a Weston unit in the Linux operating system.

8. The display controller of any preceding claim, wherein the service manager unit is configured to allow only one access by one data source to the first manager unit.

9. The display controller of any preceding claim, wherein
the first manager unit comprises a first status indicator, wherein the first manager unit is configured to receive the first display data in response to a status of the first status indicator being available; and
the second manager unit comprises a second status indicator, wherein the second manager unit is configured to receive the second display data in response to a status of the second status indicator being available.

10. A method for displaying display data comprising:
registering a manager unit comprising a status indicator as a target for receiving display data;
at the manager unit, in response to the status indicator indicating that the manager unit is available, receiving display data directly from a data source;
producing, by the manager unit, composed data using the received display data; and
providing the composed data for rendering and displaying.

11. The method of claim 10, further comprising:
registering an additional manager unit comprising an additional status indicator as an additional target for receiving display data;
at the additional manager unit, in response to the additional status indicator indicating that the additional manager unit is available, receiving additional display data from an additional data source by way of a service manager unit, and preventing, by the service manager unit, other data source from accessing the additional manager unit; and
at the additional manager unit, producing additional composed data using the received additional display data.

12. The method of claim 11, wherein registering the manager unit as a target for receiving display data and registering the additional manager unit as an additional target for receiving display data comprises connecting the manager unit and the additional manager unit together to a display sub-system node in a device tree by:
initializing the additional manager unit by binding components of the additional manager unit using a binding function of the additional manager unit;
initializing the manager unit by binding components of the manager unit using the binding function of the additional manager unit;
reducing a plane count number of the additional manager unit by one; and
the manager unit inheriting pixelclock from the additional manager unit.

13. The method of claim 12, wherein the service manager unit is a one of: a Surfaceflinger module of an Android OS, and a Weston module of a Linux OS.

14. The method of claim 13, wherein initializing the manager unit further comprises: the device tree providing timing and zpos configurations for the manager unit.

15. The method of any of claims 11 to 14, wherein
producing the composed data comprises composing the received display data with plane data to produce the composed data; and
producing the additional composed data comprises composing the received additional display data with additional plane data to produce the additional composed data.
